# EUROPEAN PATENT SPECIFICATION

(11) **EP 2 891 568 B1**
(45) Date of publication and mention of the grant of the patent: **01.01.2020**
(21) Application number: 14194995.8
(22) Date of filing: 26.11.2014
(51) Int. Cl.: B60K 5/12, B60K 5/02

(54) **Tractor frame**
Traktorrahmen
Châssis de tracteur

(30) Priority: 20.12.2013 GB 201322786
(43) Date of publication of application: 08.07.2015
(73) Proprietor: AGCO International GmbH, 8212 Neuhausen am Rheinfall (CH)
(72) Inventor: Braeutigam, Markus, 87616 Marktoberdorf (DE); Wurtele, Eberhard, 87616 Marktoberdorf (DE); Henning, Gunther, 87616 Marktoberdorf (DE)
(74) Representative: AGCO Intellectual Property Department

(56) References cited:
- JP-A- S6 334 225
- JP-A- H08 104 147
- US-A- 3 883 099

## Description

The present invention relates to agricultural vehicles and in particular, but not exclusively, to the construction of a frame and engine block for a tractor.

It is common for agricultural vehicles, typically tractors, to have a modular construction in which the housing for the clutch, transmission and rear axle form an integral part of the frame.

Typically the front part of the frame is defined either by the engine block itself or a separate front frame onto which the engine block is mounted.

The mounting of the engine block onto a front frame which extends below the engine (also referred to as "frame concept") has major advantages as follows. Firstly, the weight of the vehicle is decreased as the oil sump does not form part of the structural chassis and can therefore be of a lightweight construction. Secondly, the concept allows for alternative engines to be readily mounted on a single chassis design. Thirdly, the engine can be of a lightweight design as it is not part of the structural chassis. Lastly, the chassis can be more easily adapted, for example to provide attachment means for a front loader, without altering the design of the engine. However, this concept also has a distinct disadvantage in that the relative movement between engine and chassis necessitates the use of flexible connections between the chassis and various components such as the driveline, air intake and exhaust ducts. An example of a prior art "frame concept" tractor frame construction is provided in JP S63 34225 A, to Kubota Ltd.

A known alternative to the "frame concept" is the "block concept" in which the engine block forms an integral part of the frame. This solution has advantages in that the number of parts is reduced and the front frame is more compact. However, it also has disadvantages as follows. Firstly, disassembly of the frame for maintenance of the engine is more complex than in the frame concept. Secondly, the weight of the construction is increased as the engine must be designed to be very stiff. Thirdly, additional strain is applied to the engine block as it forms part of the structural chassis. Fourthly, the concept is less effective at isolating engine vibrations from the chassis than the frame concept. Lastly, attachment means for a front loader must be integrated into the oil sump, or alternatively, provided by an additional frame section requiring additional space.

It is an object of the present invention to at least mitigate some of the above problems.

Accordingly, there is provided an agricultural vehicle as claimed in claim 1.

Advantageously, the mounting of the engine block to the transmission housing and the front frame section provides a design which offers the major advantages of the known frame concept whilst eliminating or at least mitigating the disadvantages. In particular the advantages are as follows. Firstly, the engine can be easily disassembled as it does not form part of the chassis. Secondly, since the engine is not part of the chassis it is not required to transfer the load carried by the chassis and so it can therefore be designed with a light weight construction. Thirdly, there is very little relative movement between the engine and the chassis which allows for a simple connection therebetween.

Preferably, a rear end of the front frame section is fixed to the transmission housing. Preferably, the engine block includes an oil sump housing free from connection to the front frame section and/or the transmission housing.

Preferably, a rear face of the engine block is fixed to the clutch or transmission housing by bolts which lie substantially in the horizontal plane and are aligned with the forward direction of travel the vehicle, and preferably, the bolt heads face a rearward direction of travel of the vehicle. Note that the terms "bolt" and "screw" are used interchangeably and encompass all removable mechanical fixing means.

Preferably, the engine block is fixed to the front frame section by way of a mounting bracket, which mounting bracket may be bolted to the front frame section with at least one bolt aligned substantially in the vertical plane and/or may be bolted to the engine block by at least one bolt aligned substantially in the horizontal plane and perpendicular to the forward direction of the vehicle.

Preferably, the engine includes an oil sump housing attached to a lower face of the engine block.

Preferably, the front frame section has a first arm and a second arm, and wherein the oil sump housing is positioned between the first and second arms.

Preferably, the transmission housing comprises a clutch housing.

Preferably, the chassis further comprises a transaxle fixed to a rear of the clutch housing.

Embodiments of the invention will now be described, by way of example only, and with reference to the following drawings, in which:
Figure 1 is a schematic representation of a prior art agricultural vehicle;
Figure 2 is a schematic representation of a further prior art agricultural vehicle;
Figure 3 is a schematic representation of an agricultural vehicle according to the present invention;
Figure 4 is an isometric sectioned view through the front frame and engine block of the vehicle of Figure 3; and
Figure 5 is front section view showing part of the chassis of Figure 4 in greater detail.

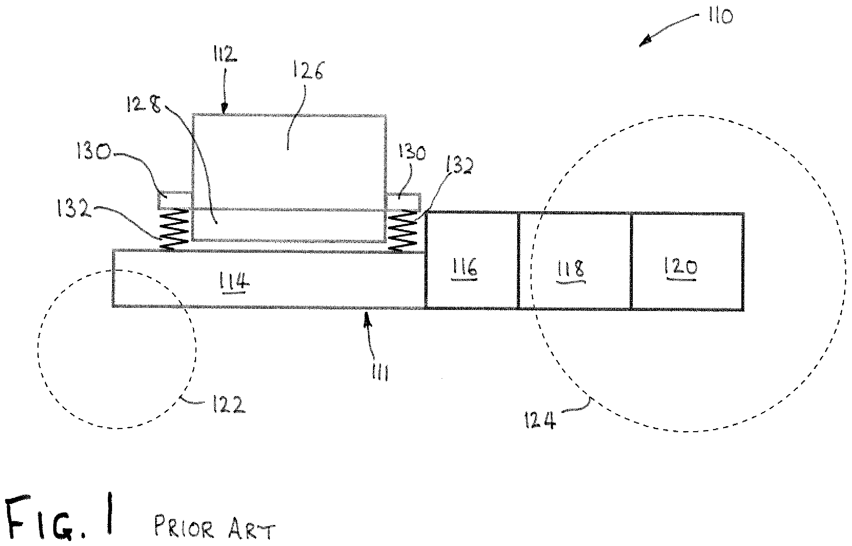

In Figure 1 a known agricultural vehicle in the form of tractor 110 is shown having an engine 112 and a chassis indicated generally at 111. The chassis is formed by a front frame section 114, a clutch housing 116, a transmission housing 118 and a rear differential housing 120 which are attached to one another in a known manner. The vehicle 110 has front wheels 122 and rear wheels 124 which are driven and controlled in a conventional manner.

The engine 112 includes an engine block 126 and oil sump housing 128. Attached or integrated to the engine block 126 are compliant engine mounts 130 which provide a degree of compliancy between the engine block 126 and the front frame section 114 by way of resilient members schematically indicated as springs 132. The compliant engine mounts 130 allows a degree of flex in the front frame section 114 which in this prior art embodiment is not sufficiently rigid for the mounting of the engine block 126 directly to the front frame section 114.

The embodiment has the advantage that the engine can be easily changed in the event of failure or maintenance. It has the disadvantage that a large front frame section 114 and separate oil sump housing 128 must be provided.

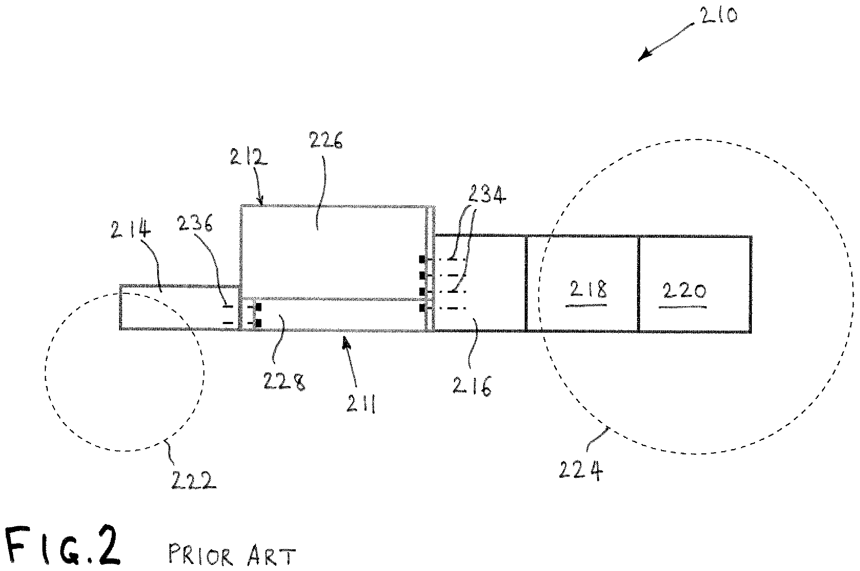

Referring to Figure 2, a second form of known agricultural vehicle in the form of tractor 210 is shown having an engine 212 and a chassis indicated generally at 211. The chassis is formed by a front frame section 214, a clutch housing 216, a transmission housing 218 and a rear differential housing 220 which are attached to one another in a known manner. The vehicle 210 has front wheels 222 and rear wheels 224 which are driven and controlled in a conventional manner.

The engine 212 is mainly formed from an engine block 226 and oil sump housing 228. The engine 212 is attached to the clutch housing 216 via rear bolts 234 and to the front frame section 214 by front bolts 236.

This design has the advantage that the vehicle is easier to assemble during production due to the reduced number of parts. It has the disadvantage that the engine is relatively difficult to remove due to it being an integral part of the chassis 211.

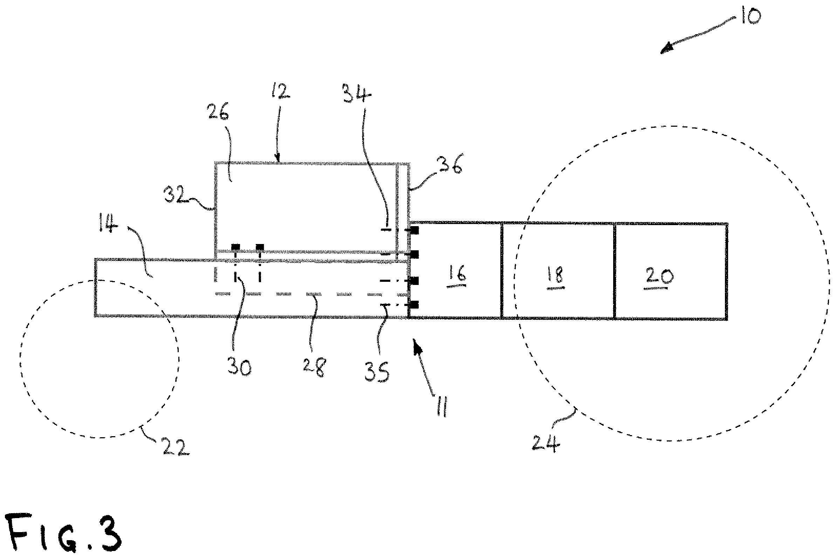

Referring to Figure 3, an agricultural vehicle in the form of tractor 10 according to the present invention is shown having an engine 12 and a chassis indicated generally at 11. The chassis is formed by a front frame section 14, a clutch housing 16, a transmission housing 18 and a rear differential housing 20. The clutch housing 16, transmission housing 18 and rear differential housing 20 are attached to one another in a known manner. The vehicle 10 has front wheels 22 and rear wheels 24 which are driven and controlled in a conventional manner.

The engine 12 is formed from an engine block 26 and oil sump housing 28. The engine block 26 is attached to the front frame section 14 by way of bolts 30 situated at or near the front end 32 of the engine block 26. The engine block 26 is attached to the clutch housing 16 by way of bolts 34 situated at the rear end 36 of the engine block 26. The oil sump 28 is not connected to clutch housing 16. The front frame section 14 is attached to the clutch housing 16 by bolts 35.

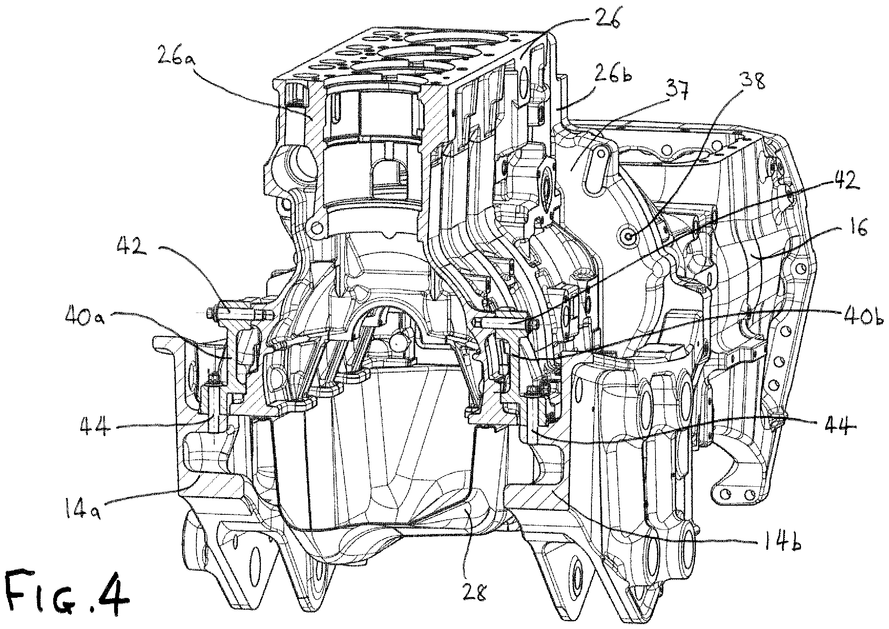

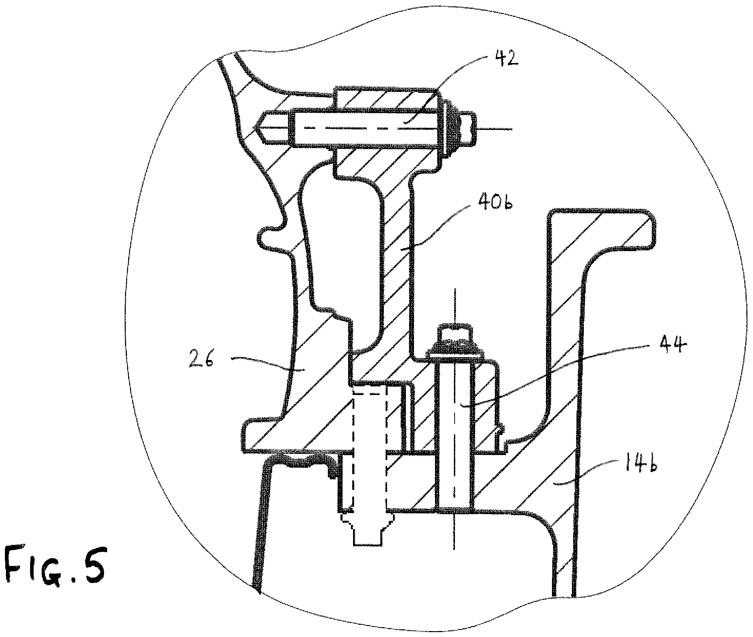

Turning now additionally to Figures 4 and 5, the front frame section 14 is shown to have a first arm 14a and a second arm 14b situated on opposing sides of the oil sump housing 28.

The engine block 26 contains an engine block housing 26a and a rear housing 26b. The rear housing 26b is attached to the rear of the engine block housing 26a in known manner. The rear housing 26b may form part of the flywheel housing or a cover to close the engine block housing 26a.

The oil sump housing 28 is vertically screwed to engine block housing 26a by bolts or screws (not shown). The oil sump housing 28 is provided below the engine block 26 to form a reservoir for lubrication oil.

Alternative designs may be provided within the scope of the invention in which a rear housing 26b forms part of the engine block housing 26a. Additional engine components, for example the cylinder head, are not shown for clarity. At the rear of the engine block 26, the rear housing 26b has a flange 37 which defines two or more holes 38 for receiving the rear bolts 36 to affix the engine 12 to the clutch housing 16. It will be appreciated that the bolts may be positioned at alternative positions on the interface between the engine 26 and the clutch housing 16 without departure from the invention.

At the front of the engine block 26 are mounting brackets 40a, 40b which each receive a horizontal bolt 42 for attaching the bracket 40a, 40b to the engine block 26 and a vertical bolt 44 for attaching the bracket 40a, 40b to the arms 14a, 14b of the front frame section 14. This is shown in detail in Figure 5.

During assembly, the engine 12 is initially affixed to the clutch housing 16 so that connection to successive parts of the driveline (for example the transmission), is correctly geometrically defined. In a second assembly step, the engine block 26 is attached to the front frame section 14. Brackets 40a, 40b ease the assembly process by allowing manufacturing tolerances to be accommodated without the need for shims (as is the case in the prior art).

Alternatively, the connection of the engine block 26 may be provided by using bores provided in engine block housing 26a and aligned in a longitudinal row which is parallel and external to threaded holes used to connect the oil sump housing 28 to engine block housing 26a by bolts or screws. In this case, manufacturing tolerances may be accommodated by using shims.

In the described embodiment, the engine 12 is initially affixed to clutch housing 16 followed by the step of connecting the engine 12 to the front frame section 14. Alternatively, the clutch housing 16 and front frame section 14 may be assembled prior to attachment to the engine 12. Furthermore, the engine 12 may be attached to the front frame 14 followed by the subsequent attachment of the engine 26 to clutch housing 16.

In such a way, the invention offers a very flexible assembly with regards to the order in which engine 12, front frame 14 and transmission housing 16 are attached to each other during assembly. Furthermore, the engine 12 can be detached very simply from the chassis in order to undertake maintenance on the vehicle.

In the described embodiments the rear end of the chassis 11, 111, 211 is provided by a clutch housing 16, a transmission housing 18 and a rear differential housing 20. The transmission housing 18 may alternatively include the clutch housing 16 and/or rear differential housing 20 without departing from the scope of the invention.

## Claims

1. An agricultural vehicle (10) having an engine (12) mounted on a chassis (11),
the chassis including a clutch housing (16) and a transmission housing (18) and a front frame section (14),
the engine (12) including an engine block (26) fixed to the chassis (11), the engine not forming part of the chassis,
wherein the engine block (26) is fixed to the front frame section (14) only at a front end (32) of the engine block, and the engine block (26) is fixed to the clutch housing (16) or transmission housing (18) only at a rear end (36) of the engine block.

2. The vehicle of claim 1 wherein a rear end of the front frame section (14) is fixed to the transmission housing (18).

3. The vehicle of claim 1 or 2 wherein the engine block (26) includes an oil sump housing (28) free from connection to the front frame section (14) and/or the transmission housing (18).

4. The vehicle of claim 1, 2 or 3 wherein a rear face (36) of the engine block (26) is fixed to the clutch housing (16) by bolts (35) which lie substantially in the horizontal plane and are aligned with the forward direction of travel of the vehicle.

5. The vehicle of claim 4 wherein the bolt heads face a backward direction of travel of the vehicle.

6. The vehicle of claim 1 wherein the engine block (26) is fixed to the front frame section (14) by way of a mounting bracket (40a, 40b).

7. The vehicle of claim 6 wherein the mounting bracket (40b) is bolted to the front frame section (14b) with at least one bolt (44) aligned substantially in the vertical plane.

8. The vehicle of claim 6 or 7 wherein the mounting bracket (40b) is bolted to the engine block (26) by at least one bolt (42) aligned substantially in the horizontal plane and perpendicular to the forward direction of the vehicle.

9. The vehicle of claim 3 wherein the oil sump housing (28) is attached to a lower face of the engine block (26).

10. The vehicle of claim 9 wherein the front frame section (14) has a first arm (14a) and a second arm (14b), and wherein the oil sump housing (28) is positioned between the first and second arms.

11. The vehicle of claim 1 wherein the engine block (26) is fixed to the front frame section (14) by bolts (30) engaging through a vertical bore in the engine block and the front frame.

12. The vehicle of claim 11 wherein said bores are aligned in a longitudinal row which is parallel and external to further bores provided to connect an oil sump housing (28) to the engine block (26).

13. The vehicle of any preceding claim wherein the transmission housing (18) comprises the clutch housing (16).

14. The vehicle of claim 13 wherein the chassis further comprises a transaxle (20) fixed to a rear of the clutch housing (16).

## Patentansprüche

1. Landwirtschaftliches Fahrzeug (10) mit einem an einem Chassis (11) montierten Motor (12),
wobei das Chassis ein Kupplungsgehäuse (16) und ein Getriebegehäuse (18) und einen Frontrahmenbereich (14) aufweist,
wobei der Motor (12) einen an dem Chassis (11) befestigten Motorblock (46) aufweist, wobei der Motor nicht Teil des Chassis ist,
wobei der Motorblock (46) nur an einem Frontende (32) des Motorblocks an dem Frontrahmenbereich (14) befestigt ist, und wobei der Motorblock (46) nur an einem Heckende (36) des Motorblocks an dem Kupplungsgehäuse (16) oder dem Getriebegehäuse (18) befestigt ist.

2. Fahrzeug nach Anspruch 1, wobei ein Heckende des Frontrahmenbereichs (14) an dem Getriebegehäuse (18) befestigt ist.

3. Fahrzeug nach Anspruch 1 oder 2, wobei der Motorblock (96) ein Ölsumpfgehäuse (28) aufweist, das frei von Verbindungen zu dem Frontrahmenbereich (14) und/oder dem Getriebegehäuse (18) ist.

4. Fahrzeug nach Anspruch 1, 2 oder 3, wobei eine Rückseite (36) des Motorblocks (26) mittels Bolzen (35) an dem Kupplungsgehäuse (16) befestigt ist, wobei die Bolzen (35) im Wesentlichen in der Horizontalebene liegen und zu der Vorwärtsfahrtrichtung des Fahrzeugs ausgerichtet sind.

5. Fahrzeug nach Anspruch 4, wobei die Bolzenköpfe in eine Rückwärtsfahrtrichtung des Fahrzeugs weisen.

6. Fahrzeug nach Anspruch 1, wobei der Motorblock (26) mittels einer Montagehalterung (40a, 40b) an dem Frontrahmenbereich (14) befestigt ist.

7. Fahrzeug nach Anspruch 6, wobei die Montagehalterung (40b) mittels mindestens eines Bolzens (44) mit dem Frontrahmenbereich (14b) verschraubt ist, wobei der Bolzen (44) im Wesentlichen in der Vertikalebene ausgerichtet ist.

8. Fahrzeug nach Anspruch 6 oder 7, wobei die Montagehalterung (40 b) mittels mindestens eines Bolzens (42) mit dem Motorblock (96) verschraubt ist, wobei der Bolzen (42) im Wesentlichen in der Horizontalebene und senkrecht zu der Vorwärtsfahrtrichtung des Fahrzeugs ausgerichtet ist.

9. Fahrzeug nach Anspruch 3, wobei das Ölsumpfgehäuse (28) an einer Unterseite des Motorblocks (26) befestigt ist.

10. Fahrzeug nach Anspruch 9, wobei der Frontrahmenbereich (14) einen ersten Arm (14a) und einen zweiten Arm (14b) aufweist, und wobei das Ölsumpfgehäuse (28) zwischen dem ersten Arm und dem zweiten Arm angeordnet ist.

11. Fahrzeug nach Anspruch 1, wobei der Motorblock (96) mittels Bolzen (30) an dem Frontrahmenbereich (14) befestigt ist, wobei die Bolzen (30) durch eine vertikale Bohrung in dem Motorblock und dem Frontrahmen angreifen.

12. Fahrzeug nach Anspruch 11, wobei die Bohrungen in einer Längsreihe ausgerichtet sind, die parallel und außerhalb von weiteren Bohrungen verläuft, die bereitgestellt sind, um ein Ölsumpfgehäuse (28) mit dem Motorblock (26) zu verbinden.

13. Fahrzeug nach mindestens einem der vorhergehenden Ansprüche, wobei das Getriebegehäuse (18) das Kupplungsgehäuse (16) aufweist.

14. Fahrzeug nach Anspruch 13, wobei das Chassis weiterhin eine Transaxle (20) aufweist, die an einer Rückseite des Kupplungsgehäuses (16) befestigt ist.

## Revendications

1. Véhicule agricole (10) ayant un moteur (12) monté sur un châssis (11),
le châssis incluant un carter d'embrayage (16) et un carter de transmission (18) et une section de cadre avant (14),
le moteur (12) incluant un bloc-moteur (26) fixé au châssis (11), le moteur ne faisant pas partie du châssis,
dans lequel le bloc-moteur (26) est fixé à la section de cadre avant (14) uniquement à une extrémité avant (32) du bloc-moteur, et le bloc-moteur (26) est fixé au carter d'embrayage (16) ou au carter de transmission (18) uniquement à une extrémité arrière (36) du bloc-moteur.

2. Véhicule selon la revendication 1, dans lequel une extrémité arrière de la section de cadre avant (14) est fixée au carter de transmission (18).

3. Véhicule selon la revendication 1 ou 2, dans lequel le bloc-moteur (26) inclut un carter d'huile (28) dépourvu de raccordement à la section de cadre avant (14) et/ou au carter de transmission (18).

4. Véhicule selon la revendication 1, 2 ou 3, dans lequel une face arrière (36) du bloc-moteur (26) est fixée au carter d'embrayage (16) par des boulons (35) qui se trouvent sensiblement dans le plan horizontal et qui sont alignés avec le sens de marche avant du véhicule.

5. Véhicule selon la revendication 4, dans lequel les têtes de boulons font face à un sens de marche arrière du véhicule.

6. Véhicule selon la revendication 1, dans lequel le bloc-moteur (26) est fixé à la section de cadre avant (14) au moyen d'un support de montage (40a, 40b).

7. Véhicule selon la revendication 6, dans lequel le support de montage (40b) est boulonné sur la section de cadre avant (14b) avec au moins un boulon (44) sensiblement aligné dans le plan vertical.

8. Véhicule selon la revendication 6 ou 7, dans lequel le support de montage (40b) est boulonné sur le bloc-moteur (26) par au moins un boulon (42) sensiblement aligné dans le plan horizontal et perpendiculaire au sens de marche avant du véhicule.

9. Véhicule selon la revendication 3, dans lequel le carter d'huile (28) est attaché à une face inférieure du bloc-moteur (26).

10. Véhicule selon la revendication 9, dans lequel la section de cadre avant (14) a un premier bras (14a) et un deuxième bras (14b), et dans lequel le carter d'huile (28) est positionné entre les premier et deuxième bras.

11. Véhicule selon la revendication 1, dans lequel le bloc-moteur (26) est fixé à la section de cadre avant (14) par des boulons (30) s'engageant à travers un alésage vertical dans le bloc-moteur et le cadre avant.

12. Véhicule selon la revendication 11, dans lequel lesdits alésages sont alignés dans une rangée longitudinale qui est parallèle et externe à d'autres alésages prévus pour raccorder un carter d'huile (28) au bloc-moteur (26).

13. Véhicule selon l'une quelconque des revendications précédentes, dans lequel le carter de transmission (18) comprend le carter d'embrayage (16).

14. Véhicule selon la revendication 13, dans lequel le châssis comprend en outre une boite-pont (20) fixée à un arrière du carter d'embrayage (16).
